# DEMANDE DE BREVET EUROPEEN

(11) **EP 2 278 370 A1**
(43) Date de publication de la demande: **26.01.2011**
(21) Numéro de dépôt: 09165438.4
(22) Date de dépôt: 14.07.2009
(51) Int. Cl.: G02B 6/42

(54) **Dispositif de couplage pour fibres optiques**

(71) Demandeur: SERCALO MICROTECHNOLOGY LTD., 9494 Schaan (LI)
(72) Inventeur: Marxer, Cornel, 2000 Neuchatel (CH); Herbst, Peter, 2000 Neuchatel (CH)
(74) Mandataire: Hasler, Erich

(57) **Abrégé**

Un dispositif de couplage (1, 2) pour fibres optiques (19) comprend une première plaque (11) munie d'une pluralité de trous (13) traversants, dont une portion 13a, au moins, est de diamètre ajusté au diamètre desdites fibres optiques (19), et une deuxième plaque (12) solidaire de ladite première plaque (11) par une face. Ledit dispositif (1, 2) comprend encore une troisième plaque (15), solidaire de ladite première plaque (11), et munie d'une pluralité de trous (16) traversants, dont une portion (16a), au moins, est de diamètre ajusté au diamètre desdites fibres optiques (19), alignés relativement aux trous (13) de ladite première plaque (11), de manière à former des logements (18, 25) dans lesquels lesdites fibres optiques (19) sont engagées.

## Description

La présente invention se rapporte au domaine des fibres optiques. Elle concerne plus précisément un dispositif de couplage bidimensionnel d'un faisceau de fibres optiques.

De tels dispositifs de couplage sont connus de l'homme de métier. Ils sont destinés à la transmission d'un signal lumineux entre un faisceau de fibres optiques et un autre faisceau de fibres optiques, ou un ou plusieurs composants optiques ou optoélectroniques, actifs ou passifs, tels que des connecteurs, des diodes électroluminescentes ou à laser etc.

Afin de minimiser les pertes de signal en entrée ou en sortie des fibres optiques par désalignement optique, par rétro-réflexion ou autre effet opto-géométrique, le dispositif de couplage doit réaliser un alignement précis de l'axe des fibres optiques et éviter une discontinuité d'indice de réfraction à l'interface entre le coeur de la fibre optique et le milieu extérieur. Le dispositif de couplage a, par conséquent, une fonction mécanique de positionnement et de fixation des fibres optiques, et une fonction optique de continuité de l'indice de réfraction. De plus, l'encombrement du dispositif de couplage doit être réduit au maximum pour des raisons pratiques évidentes, et pour se conformer à la miniaturisation croissante des dispositifs optoélectroniques.

Le document US6328482 divulgue un dispositif de couplage répondant à ces diverses exigences. Ledit dispositif est formé d'une première plaque en silicium destinée au positionnement et à la fixation d'une pluralité de fibres optiques dans un plan, et d'une deuxième plaque en verre borosilicate, solidaire de la première par une face. La première plaque comporte un réseau bidimensionnel de trous traversants, d'un diamètre ajusté au diamètre des fibres optiques. Typiquement le diamètre des trous est de l'ordre de 127 micromètres pour un diamètre des fibres optiques de 125 ± 0.5 micromètres. La deuxième plaque est munie d'un réseau bidimensionnel de lentilles sur sa face libre, les lentilles étant alignées avec les trous. La compacité du dispositif est conférée par le caractère bidimensionnel du dispositif de couplage.

Les réseaux de trous et de lentilles sont réalisés par des procédés bien connus de l'homme de métier, de photolithographie et gravure ionique réactive. Les deux plaques sont alignées l'une par rapport à l'autre à l'aide de structures d'alignement gravées en même temps que les trous et les lentilles, puis rendues solidaires par soudage anodique. Les fibres optiques sont alors engagées dans les trous jusqu'à ce que leur extrémité en biseau vienne au contact de la deuxième plaque. L'espace résiduel autour de la fibre est comblé avec une colle optique d'indice de réfraction proche de celui du coeur de la fibre.

Le dispositif ainsi décrit assure le positionnement de la fibre grâce au trou, et sa fixation ainsi que la continuité d'indice de réfraction, à l'aide de la colle.

La précision du positionnement de la fibre est donnée par l'angle maximum formé entre l'axe de la fibre et la normale à la deuxième plaque. Cet angle dépend de la hauteur du trou, de son diamètre, et de l'erreur sur le diamètre. Comme mentionné précédemment, le diamètre du trou est de 127 micromètres, et l'épaisseur d'une plaque de silicium est typiquement de 400 ou 625 micromètres. Avec ces valeurs, il apparait que la précision du positionnement de la fibre dans le dispositif selon l'état de la technique, est, au mieux, de 0.2 degré. Cette valeur est satisfaisante, mais en pratique, compte tenu des limitations imposées par les techniques de gravure ionique réactive, elle ne peut pas être atteinte. En effet, un trou d'un diamètre constant 127 micromètres ne peut être réalisé que sur une épaisseur de 50 micromètres environ. Au-delà, le trou est évasé, et ses dimensions latérales ne sont pas conservées. La hauteur utile du trou est alors seulement de 50 micromètres. Il en résulte que la précision de positionnement axial de la fibre selon l'état de la technique avoisine plutôt les 3 ! Cette précision est nettement insuffisante.

De la faible hauteur utile du trou par rapport au diamètre de la fibre il résulte également une deuxième limitation potentiellement très grave : De la petite surface de collage s'ensuit une faible résistance aux contraintes latérales qui peuvent s'exercer sur la fibre pendant ou après le collage, par exemple pendant la manipulation. Ainsi une force latérale appliquée, par exemple, à 1 centimètre du point de collage de la fibre, exerce, en ce point, une contrainte de cisaillement supérieure à ce que peut supporter la meilleure colle optique ! Cette faiblesse par rapport aux forces latérales se trouve amplifiée quand on utilise des fibres pré-assemblées dans une ferrule, sorte de tube en métal, en résine ou en céramique, destiné à protéger mécaniquement la fibre. Une ferrule a un diamètre typiquement de 1.25 mm, ainsi le rapport entre le diamètre des pièces à positionner et la utile du trou devient encore plus défavorable.

Par ailleurs, on notera que l'utilisation de colle optique pour la double fonction de fixation de la fibre et de continuité de l'indice de réfraction, est potentiellement à l'origine de pertes de signal. En effet, le coefficient de dilatation thermique du silicium, qui forme la première plaque, et du verre borosilicate, qui forme la deuxième plaque, est de 3.5µm.deg⁻¹.m⁻¹. Ce même coefficient vaut 0.5µm.deg⁻¹.m⁻¹ pour le quartz qui forme la gaine de la fibre optique. Une telle différence de coefficients de dilatation thermique génère des contraintes importantes sur la colle, en cas de variations de températures. Ces contraintes peuvent entraîner, à terme, le délaminage de la fibre optique et la rupture de l'indice de réfraction à l'interface entre le coeur de la fibre et le milieu extérieur. Les pertes de signal sont alors considérables.

La présente invention a pour but d'améliorer l'état de la technique en fournissant un dispositif bidimensionnel de couplage pour fibres optiques apte à positionner des fibres optiques avec une précision et une fiabilité supérieures à celles obtenues classiquement.

Plus précisément, l'invention concerne un dispositif de couplage pour fibres optiques comprenant une première plaque munie d'une pluralité de trous traversants, dont une portion, au moins, est de diamètre ajusté au diamètre des fibres optiques, et une deuxième plaque solidaire de la première plaque par une face. Selon l'invention le dispositif de couplage comprend encore une troisième plaque, solidaire de la première plaque, et munie d'une pluralité de trous traversants, dont une portion, au moins, est de diamètre ajusté au diamètre des fibres optiques, alignés relativement aux trous de la première plaque, de manière à former des logements dans lesquels les fibres optiques sont engagées.

Grâce à la troisième plaque solidaire de la première plaque, le positionnement des fibres optiques, relativement à la normale à la deuxième plaque, est amélioré en raison d'un rapport diamètre des logements sur leur hauteur plus favorable.

Dans un mode de réalisation avantageux, le dispositif comporte encore une entretoise, disposée solidairement entre les première et troisième plaques, de manière à les maintenir distantes et parallèles, les logements comportant alors une section initiale et une section terminale distantes l'une de l'autre de la hauteur de l'entretoise.

Grâce à l'entretoise, le rapport précité est encore plus favorable, ce qui permet d'améliorer encore la précision du positionnement de la fibre optique dans son logement.

Dans un mode de réalisation particulièrement avantageux, l'entretoise forme avec les première et troisième plaques, un volume fermé de façon étanche, les fibres optiques sont fixées dans les logements à l'aide d'une dose de colle, injectée dans la section initiale de manière à former, avec la fibre optique, un bouchon étanche dans la section initiale, et le volume est rempli d'un composé optique fluide d'indice de réfraction proche de celui du coeur de la fibre.

Grâce à cet agencement, la fonction de fixation de la fibre est assurée par de la colle, et la fonction de continuité de l'indice de réfraction est assuré par le fluide, lequel peut absorber les dilatations des fibres et des plaques sans subir de contrainte. Le dispositif est, par conséquent exempt du problème de pertes optiques dû au délaminage de la fibre optique.

D'autres caractéristiques et avantages de la présente invention ressortiront plus clairement de la description détaillée qui suit d'un exemple de réalisation d'un dispositif de couplage selon l'invention, cet exemple étant donné à titre purement illustratif et non limitatif seulement, en liaison avec le dessin annexé sur lequel :
- les figures 1 et 2 sont des vues respectivement en perspective éclatée et en coupe d'un premier mode de réalisation d'un dispositif de couplage selon l'invention, avant montage de fibres optiques,
- la figure 3 illustre une vue en coupe d'une variante de ce premier mode de réalisation,
- la figure 4 représente une vue en coupe de ce premier mode de réalisation d'un dispositif de couplage selon l'invention, après montage de fibres optiques,
- la figure 5 illustre le gain en précision de positionnement d'une fibre grâce au premier mode de réalisation d'un dispositif de couplage selon l'invention,
- les figures 6 et 7 sont des vues respectivement en perspective éclatée et en coupe d'un deuxième mode de réalisation d'un dispositif de couplage selon l'invention, avant le montage de fibres optiques,
- la figure 8 représente une vue en coupe d'une variante de ce deuxième mode de réalisation,
- les figures 9 et 10 sont des vues en coupe de ce deuxième mode de réalisation d'un dispositif de couplage selon l'invention, après montage, respectivement, de fibres optiques et de ferrules, et
- la figure 11 illustre le gain en précision de positionnement d'une fibre grâce au deuxième mode de réalisation d'un dispositif de couplage selon l'invention.

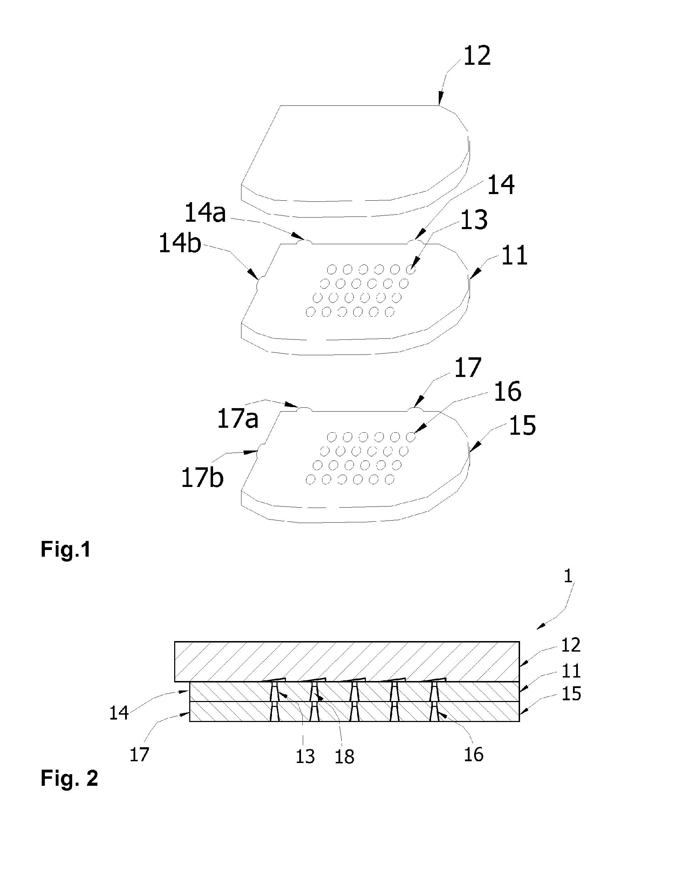

On notera, en remarque préliminaire, que sur l'ensemble des figures 1 à 10, les échelles verticales et latérales n'ont volontairement pas été respectées, afin de faciliter la lecture du dessin.

Le dispositif de couplage pour fibres optiques représenté en figures 1 et 2, et référencé dans son ensemble 1, comporte classiquement une première plaque 11 et une deuxième plaque 12 solidaires l'une de l'autre par une face.

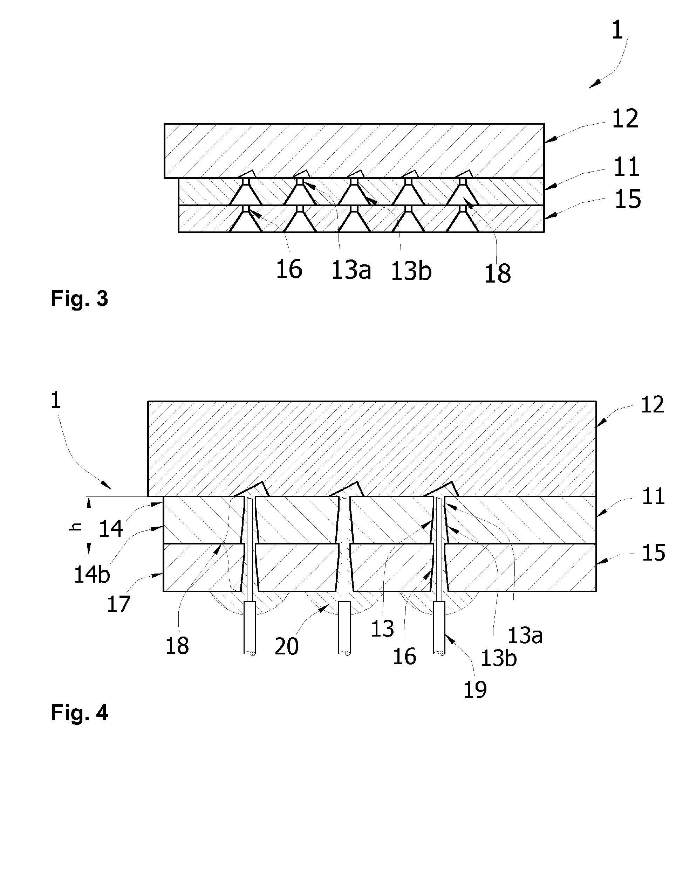

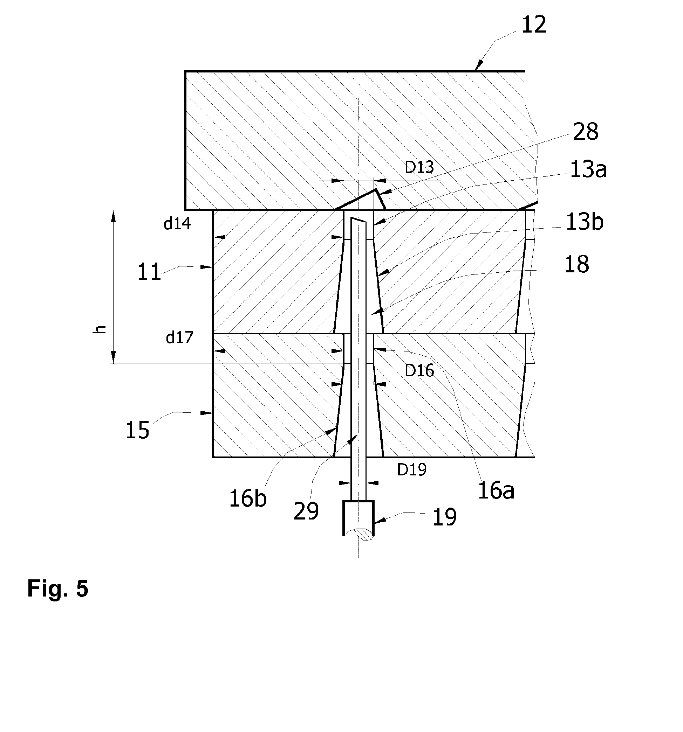

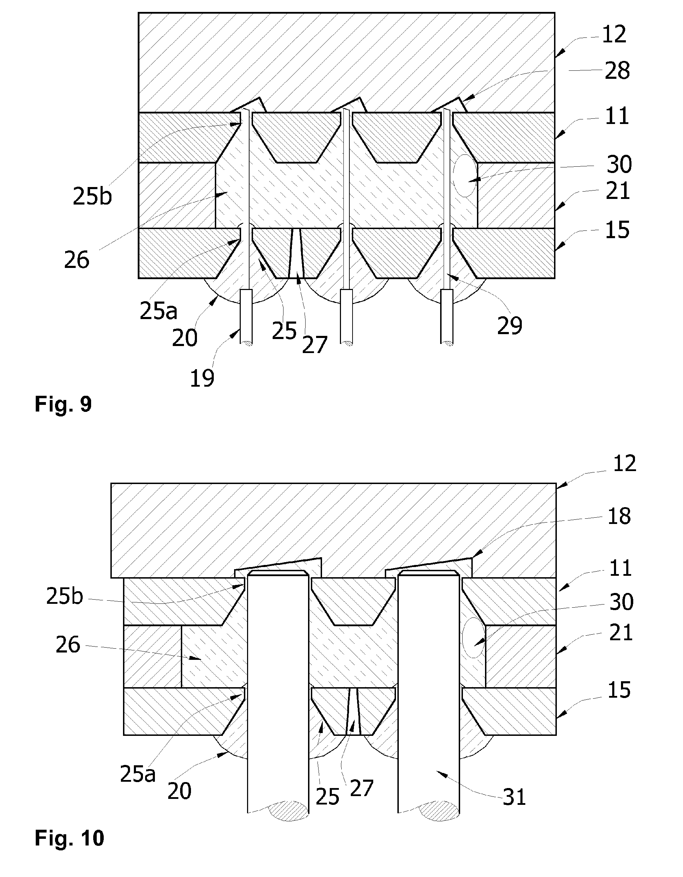

Ladite première plaque 11 est en silicium monocristallin, de préférence polie double face. Elle comporte une pluralité de trous traversants 13, alignés selon une série de lignes et de colonnes. Lesdits trous 13 sont réalisés par des techniques de photolithographie et gravure ionique réactive, bien connues de l'homme de métier. Ils comportent une première portion 13a, de hauteur environ 50 micromètres, de diamètre ajusté au diamètre des fibres optiques. On entend par là, que le diamètre de la portion 13a est supérieur à celui des fibres optiques, de manière à pouvoir introduire sans forcer les fibres dans les trous 13, mais très proche de manière à ce que les fibres optiques soient positionnées avec précision une fois engagées à l'intérieur. La question de la précision du positionnement des fibres sera abordée plus en détail en regard des figures 5 et 10. On se bornera à mentionner ici que le diamètre des portions 13a est typiquement de 127 micromètres pour un diamètre des fibres optiques de 125 micromètres. Les trous 13, comportent, en outre, une deuxième portion 13b, de hauteur environ 575 micromètres, légèrement évasée. Ils sont réalisés par gravure ionique réactive sur toute leur longueur, après formation d'un masque en résine. Un tel procédé permet de réaliser des trous 13 tels que décrits précédemment, comportant une portion 13a de dimensions latérales bien définies, et une portion 13b légèrement évasée en raison de la composante anisotropique de la gravure. Selon une variante représentée en figure 3, les trous 13 comportent une portion 13a de diamètre constant et une portion 13b fortement évasée. Dans ce cas de figure, le procédé d'obtention des trous 13 comporte une première étape de gravure ionique réactive, destinée à graver la portion 13a de diamètre constant, et une deuxième étape de gravure humide, destinée à graver la portion 13b fortement évasée. Ce procédé, bien connu de l'homme de métier, nécessite de former consécutivement deux masques sur la face avant et face arrière, alignés l'un par rapport à l'autre. Il est plus complexe mais permet d'obtenir une portion 13a mieux définie latéralement que dans le cas d'un trou de diamètre constant, car le premier masque est moins sollicité et, au final, moins attaqué latéralement. Dans ce cas, le diamètres des portions 13a atteint 125.5 micromètres avec une erreur de 0.2 micromètre. L'une ou l'autre de ces variantes est envisageable dans le cadre de la présente invention.

La plaque 11 comporte, en outre, au moins une marque d'alignement 14 selon deux axes contenus dans le plan de la plaque 11, gravée de part en part de la plaque 11, de façon concomitante aux trous 13. Dans le cas présenté en figure 1, ladite marque d'alignement 14 est formée de deux côtés, parallèles respectivement aux colonnes et lignes de trous 13, munis chacun de deux protubérances 14a et 14b. En variante, la marque d'alignement 14 pourrait être constituée d'un trou en forme de croix, de deux trous, ou toute autre structure permettant un alignement dans le plan de la plaque 11. La plaque 11 peut également, sans préjudice, comporter plusieurs marques d'alignement. Avantageusement la marque d'alignement 14 est défini dans le seul et même masque de photolithographie qui défini les trous 13.

La deuxième plaque 12 est en verre, par exemple en verre borosilicate, de préférence polie double face, et ne comporte pas de structure. En variante, la plaque 12 peut présenter des structures optiques, telles qu'un réseau de lentilles aligné avec le réseau de trous 13. Dans ce cas, la plaque 12 comporte une structure d'alignement compatible avec la marque d'alignement 14.

Les plaques 11 et 12 sont rendues solidaires l'une de l'autre par un procédé de soudage anodique bien connu de l'homme de métier, ou par tout autre procédé conférant une cohésion forte entre les deux plaques 11 et 12.

Selon l'invention, le dispositif de couplage 1, comprend encore une troisième plaque 15 en silicium monocristallin, solidaire de la première plaque 11 par une face. Ladite troisième plaque 15 est globalement identique à la première plaque 11. Elle comporte un réseau de trous 16 en lignes et colonnes, identique au réseau de trous 13, formé par les mêmes procédés, et au moins une marque d'alignement 17 compatible avec la marque d'alignement 14. Avantageusement, les plaques 11 et 15 sont structurées à l'aide des mêmes masques de photolithographie.

Les plaques 11 et 15 sont alignées mécaniquement l'une par rapport à l'autre, de manière à ce que les trous 13 et les trous 16 soient situés dans le prolongement les uns des autres et forment des logements 18 pour des fibres optiques. On utilise pour cela une cale munie de deux surfaces de référence, contre laquelle on vient positionner les marques d'alignement 14 et 17 en butée. Si la marque d'alignement est constituée d'un ou plusieurs trous, en forme de croix ou circulaires, on utilise une ou plusieurs goupilles de référence, de forme adaptée, que l'on engage dans les trous d'alignement. L'alignement peut également être effectué en montant lesdites plaques 11 et 15 de façon permanente dans un bâti muni de surfaces de référence. Un tel alignement mécanique contre des surfaces de référence permet d'obtenir une précision d'alignement de l'ordre de 0.1 micromètre. On notera, par ailleurs, que la hauteur utile h des logements 18 ainsi formés est équivalente à une fois l'épaisseur d'une plaque de silicium, plus une fois la hauteur de la portion 13a, soit 675 micromètres.

Les plaques 11 et 15 ainsi alignées sont rendues solidaires l'une de l'autre par soudage anodique.

Des fibres optiques 19 sont engagées dans les logements 18 formés par les trous 13 et 16, tel que représenté en figure 4. Lesdites fibres optiques 19 sont introduites nues dans les logements 18. En variante, les fibres optiques pourraient être introduites recouvertes d'un tube, par exemple en plastique, en céramique ou en métal, formant une protection mécanique pour la fibre. Un tel agencement comprenant une fibre optique enfermée dans un tube de protection est couramment appelé ferrule par l'homme de métier. Lesdites fibres 19 sont introduites dans les logements 18, jusqu'à venir au contact de la plaque 12 par leur extrémité qui est de préférence biseautée 29. Une colle optique 20 est injectée à l'aide d'une micro-seringue par les trous 16, de manière à venir combler le volume résiduel autour des fibres 19 et assurer leur fixation dans les logements 18. La colle optique 20 a un indice de réfraction de 1.4, proche de celui du coeur des fibres optiques 19 et du verre borosilicate formant la plaque 12, de manière à préserver la continuité de l'indice de réfraction en sortie des fibres 19.

Grâce à la troisième plaque 15, et à son alignement mécanique par rapport à la plaque 11, le dispositif de couplage selon l'invention permet de gagner en précision de l'alignement de la fibre optique 19, par rapport à l'état de la technique. On rappelle que la précision de positionnement peut s'exprimer comme l'angle formé entre l'axe de la fibre optique 19 et la normale N à la plaque 12, le rayonnement sortant de la fibre 19 devant pénétrer dans la plaque 12, idéalement, avec un angle de 90°. En figure 5, on a représenté une fibre optique 19 dans son logement 18, ainsi que les différentes cotes y relatives. Les diamètres D₁₃ et D₁₆ des portions 13a et 16a, des trous 13 et 16 respectivement, sont de 125.7 micromètres. Les distances d₁₄ et d₁₇ des trous 13 et 16, respectivement aux marques d'alignement 14 et 17, présentent une même erreur de l'ordre de 0.2 micromètre, étant obtenues par les mêmes procédés. Enfin, l'alignement mécanique des deux plaques 11 et 15 ajoute une erreur de 0.1 micromètre, comme déjà mentionné. Or, l'erreur sur les distances d₁₄ et d₁₇, ainsi que l'erreur due à l'alignement mécanique des plaques 11 et 15, ne contribuent pas directement à l'erreur de positionnement de la fibre 19 dans le logement 18, mais uniquement au désalignement des trous 13 et 16. Seule la différence entre les diamètres D₁₃ et D₁₆ des portions 13a et 16a des trous 13 et 16, et le diamètre des fibres optiques 19, rapportée à la hauteur utile h du logement 18, contribue à l'erreur de positionnement. Avec une différence de diamètres valant au maximum 1.4 micromètres, pour une hauteur utile h de logement 18 de 675 micromètres, l'erreur de positionnement par rapport à la normale N à la plaque 12 est de l'ordre de l'ordre de 0.1°, soit environ 30 fois moins que l'erreur selon l'état de la technique !

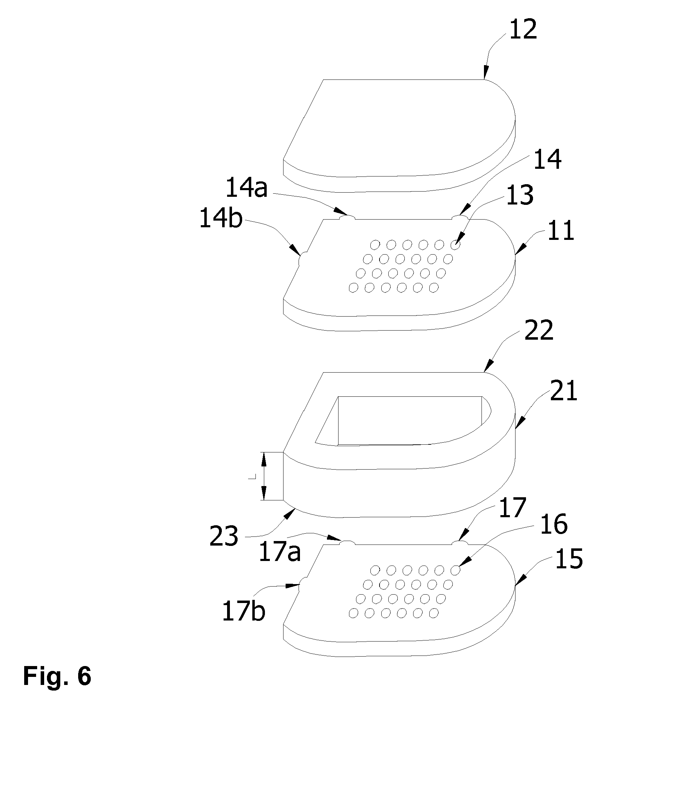

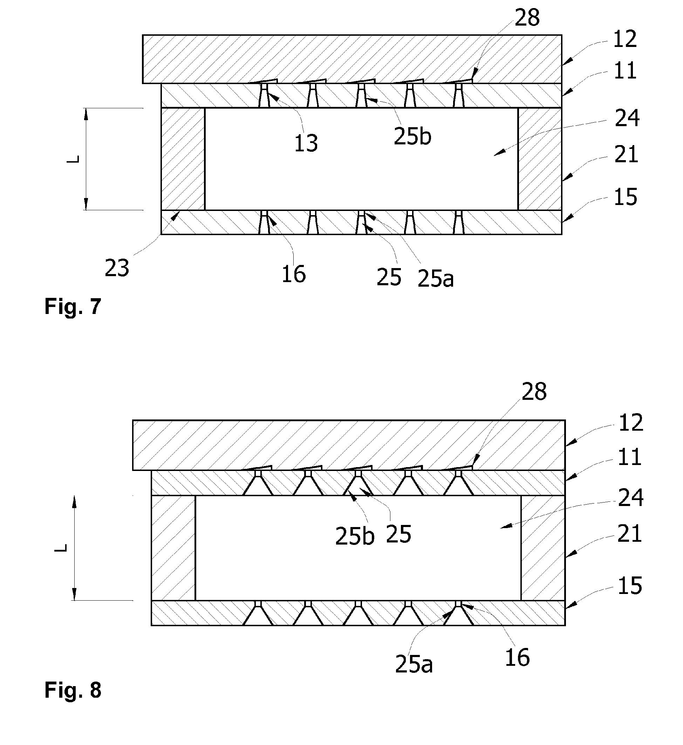

On se réfère maintenant aux figures 6 et 7, qui sont des vues, respectivement en perspective éclatée et en coupe d'un deuxième mode de réalisation d'un dispositif de couplage selon l'invention. Le dispositif de couplage pour fibres optiques représenté en figures 6 et 7, et référencé dans son ensemble 2, se distingue du dispositif de couplage 1 décrit précédemment, en ce qu'il comporte, en outre, une entretoise 21 interposée entre les plaques 11 et 15. Ladite entretoise 21 est formée d'un tronçon de cylindre en verre borosilicate, muni d'une face supérieure 22 et d'une face inférieure 23 parallèles. Sa hauteur L est d'environ 2 millimètres. L'entretoise 21 est soudée à la plaque 11 par sa face supérieure 22, et à la plaque 15 par sa face inférieure 23, de manière à maintenir lesdites plaques 11 et 15 solidaires, distantes et parallèles. De préférence, le soudage anodique est effectué de manière à réaliser une étanchéité totale entre les plaques 11 et 15 et l'entretoise 21. En variante, les plaques 11 et 15 et l'entretoise 21 sont rendues solidaires de manière non étanche. Quel que soit le mode de soudage, l'entretoise 21 définit, avec les plaques 11 et 15, un volume intérieur 24 dont la fonction sera décrite ultérieurement.

Comme pour le premier mode de réalisation, les plaques 11 et 15 comportent une pluralité de trous 13 et 16, respectivement. Lesdits trous 13 et 16 sont réalisés soit par gravure ionique réactive seulement, tel que représenté en figures 6 et 7, soit par un procédé comportant une étape de gravure ionique réactive et une étape de gravure humide, tel que représenté en figure 8. Ils forment des logements 25 pour des fibres optiques, constitués de deux sections 25a, et 25b, respectivement initiale et terminale, formées par les trous 16 et 13, et distantes l'une de l'autre de la hauteur L de l'entretoise 21.

Des fibres optiques 19 sont engagées dans les logements 25 constitués par les trous 13 et 16, tel que représenté en figure 9. Lesdites fibres sont introduites dans les logements 25, jusqu'à venir au contact de la plaque 12 par leur extrémité qui est de préférence en forme biseauté 29. Avantageusement pour réduire la réflexion de lumière en retour dans la fibre, aussi la surface de la plaque 12 en face du coeur de la fibre a une forme biseautée 28. L'introduction des fibres optiques 19 dans les logements 25 ne pose pas de difficulté, car une fois engagées dans la section initiale 25a, elles sont guidées jusqu'à la section terminale 25b, et y pénètrent directement. Une petite dose de colle optique 20 est injectée à l'aide d'une micro-seringue dans la section initiale 25a des logements 25. La dose est calculée pour limiter la présence de colle 20 à ladite section initiale 25a et assurer que la fixation des fibres 19 est réalisée uniquement par cette section du logement 25. La colle 20 a aussi pour objet de fermer de façon étanche le volume intérieur 24, en formant, avec la fibre 19, un bouchon étanche dans la section initiale 25a.

Ledit volume 24 ainsi que le volume résiduel autour des fibres optiques 19 dans les sections terminales 25b des logements 25, sont remplis d'un composé optique fluide 26, tel qu'un gel optique, une huile optique ou un autre composé fluide d'indice de réfraction proche de celui du coeur des fibres optiques 19. Le composé optique 26 est injecté dans le volume 24 par un trou 27 pratiqué dans la plaque 15 à cet effet, et refermé ultérieurement. Cette opération est effectuée, de préférence, sous vide de manière à combler soigneusement l'ensemble du volume intérieur 24 et du volume résiduel autour des fibres optiques 19. Le composé optique fluide 26 est ainsi logé, en outre, entre l'extrémité des fibres optiques 19 et la surface 28 de la plaque 12, et assure la continuité de l'indice de réfraction en sortie des fibres optiques 19. On notera, que pour un composé optique fluide 26 formé d'un gel, il n'est pas nécessaire que le volume intérieur 24 soit fermé par l'entretoise 21 de manière étanche, car le gel reste en place sans couler ni s'évaporer. De préférence, une bulle d'air 30 est ajoutée après l'introduction du fluide 26, afin d'absorber une éventuelle dilatation thermique de celui-ci.

On se réfère maintenant à la figure 10, qui diffère de la figure 9 en ce que des ferrules 31 sont introduites dans les logements 25 en lieu et place des fibres optiques 19. L'agencement est, pour le reste, identique à l'agencement décrit en regard de la figure 9, exception faite des dimensions qui doivent être adaptées au diamètre des ferrules 31.

On notera que grâce à l'agencement du dispositif de couplage 2 décrit précédemment, les fonctions respectivement mécanique, de fixation des fibres optiques 19, et optique, de continuité de l'indice de réfraction, sont avantageusement séparées. La première est assurée par la section initiale 25a du logement 25 et la colle 20, tandis que la deuxième est réalisée par la section terminale 25b du logement 25 et le fluide optique 26. Cette séparation est rendue possible par la présence de l'entretoise 21, qui sépare physiquement les logements 25 en deux sections distinctes 25a et 25b pouvant être remplies d'un fluide indépendamment l'une de l'autre. La section terminale 25b est ainsi remplie d'un composé optique fluide 26, apte à absorber les dilatations ou contractions du dispositif de couplage 2 sans effet de délaminage tel qu'observé avec une colle optique. La continuité de l'indice de réfraction est alors assurée en toute circonstance et les pertes de rayonnement en sortie des fibres optiques 19 sont évitées.

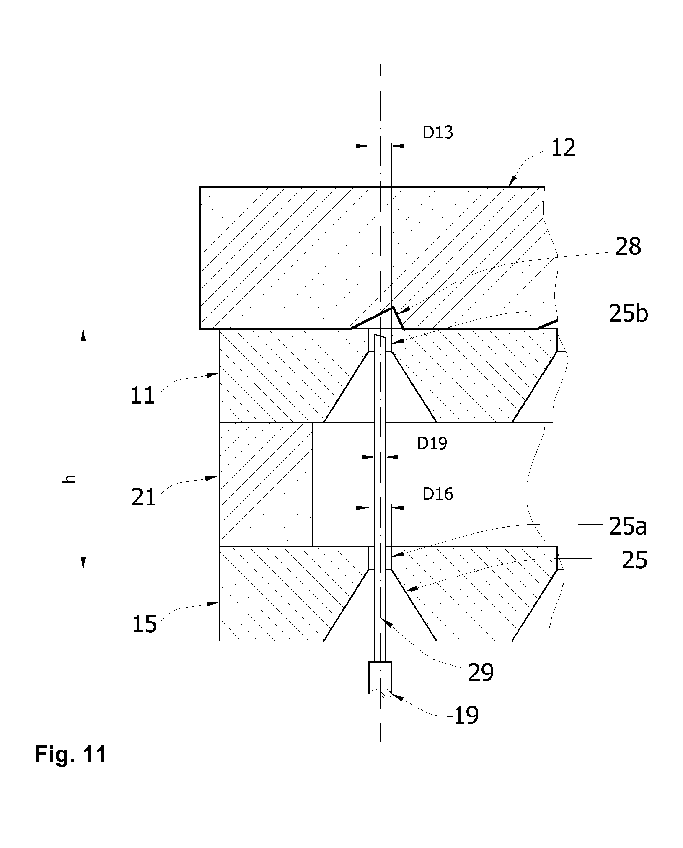

On notera, en outre, que grâce à l'entretoise 21, l'alignement de la fibre optique 19 en référence à la normale N à la plaque 12 est considérablement amélioré. On se réfère pour cela à la figure 11 qui représente une fibre optique 19 dans son logement 25. L'entretoise 21 n'introduit pas d'erreur supplémentaire au niveau des cotes latérales, et en particulier au niveau des diamètres des portions 13a et 16a des trous 13 et 16. Elle augmente, en revanche, la hauteur utile H du logement 25 de sa propre hauteur L. Pour une hauteur utile H de logement 25 de 2.675 millimètre, l'erreur de positionnement par rapport à la normale N à la plaque 12 est maintenant de l'ordre de l'ordre de 0.03°, soit un gain en précision d'un facteur 3 par rapport au premier mode de réalisation du dispositif de couplage et d'un facteur 45 par rapport à l'état de la technique !

Ainsi a été décrit un dispositif de couplage 1, 2 dont les performances sont améliorées par rapport à un dispositif de couplage classique. Bien entendu, le dispositif de couplage selon l'invention ne se limite pas aux modes de réalisation qui viennent d'être décrits et diverses modifications et variantes simples peuvent être envisagées par l'homme du métier sans sortir du cadre de l'invention tel que défini par les revendications annexées.

On notera, en particulier, que dans les modes de réalisation présentés, les fibres optiques sont introduites nues dans les logements 18 et 25 ou protégées par une ferrule. En variante, la fibre pourrait être munie d'un connecteur à son extrémité. Dans ce cas, l'extrémité du connecteur serait montée dans le dispositif de couplage en lieu et place de l'extrémité de la fibre optique. Pour cette variante, la taille des trous 13 et 16 devrait être adaptée au diamètre de l'extrémité du connecteur tel que décrit dans la Figure 10.

### Numéro Description

- 1: Dispositif de couplage selon l'invention sans entretoise
- 2: Dispositif de couplage selon l'invention avec entretoise
- 11: Plaque de trous micro-usinés
- 12: Plaque de verre, peut être muni d'éléments optiques tels que lentilles etc
- 13: Trous traversants
- 13a: Portion de trou avec précision supérieure
- 13b: Portion de trou évasé
- 14: Marque d'alignement
- 14a: Variante en protubérance sur un côté avec 2 points de contacts
- 14b: Variante en protubérance sur un côté avec 1 point de contacts
- 15: 2^{ème} Plaque de trous microusinés
- 16: Trous traversant de la deuxième plaque
- 17: Marques d'alignement sur la deuxième plaque
- 18: Logement pour fibres optiques ou ferrules
- 19: Fibres optiques (ou ferrules munies de fibres)
- 20: Colle optique
- 21: Entretoise de hauteur L
- 22: Face supérieure de l'entretoise
- 23: Face inférieure de l'entretoise
- 24: Volume intérieur
- 25: Logement pour fibres ou ferrules
- 25a: Section du logement initiale
- 25b: section terminale
- 26: Fluide optique
- 27: Trou de remplissage
- 28: Surface biseautée de la plaque 12
- 29: Extrémité biseautée de la fibre ou de la ferrule
- 30: Bulle d'air dans le volume 24
- 31: Fibre en ferrule, ou «connecteur »

## Revendications

1. Dispositif de couplage (1, 2) pour fibres optiques (19) comprenant :
- une première plaque (11) munie d'une pluralité de trous (13) traversants, dont une portion 13a, au moins, est de diamètre ajusté au diamètre desdites fibres optiques (19), et
- une deuxième plaque (12) solidaire de ladite première plaque (11) par une face,
**caractérisé en ce que**
ledit dispositif (1, 2) comprend encore une troisième plaque (15), solidaire de ladite première plaque (11), et munie d'une pluralité de trous (16) traversants, dont une portion (16a), au moins, est de diamètre ajusté au diamètre desdites fibres optiques (19), alignés relativement aux trous (13) de ladite première plaque (11), de manière à former des logements (18, 25) dans lesquels lesdites fibres optiques (19) sont engagées.

2. Dispositif selon la revendication 1, **caractérisé en ce que** lesdites première (11) et troisième plaques (15) sont solidaires par une face.

3. Dispositif selon la revendication 1 ou 2, **caractérisé en ce que** lesdites fibres optiques (19) sont fixées dans lesdits logements (18), à l'aide d'une colle optique (20) comblant l'espace résiduel autour des fibres optiques (19) dans lesdits logements (18).

4. Dispositif selon les revendications 1 à 3, **caractérisé en ce qu'**il comporte, en outre, une entretoise (21) de hauteur L, disposée solidairement entre les première (11) et troisième plaques (15), de manière à les maintenir distantes et parallèles, lesdits logements (25) comportant alors une section initiale (25a) et une section terminale (25b) distantes l'une de l'autre de la hauteur L de ladite entretoise (21).

5. Dispositif selon la revendication 4, **caractérisé en ce que** ladite entretoise (21) forme avec les première (11) et troisième plaques (15), un volume (24) fermé.

6. Dispositif selon la revendication 4 ou 5, **caractérisé en ce que** lesdites fibres optiques (19) sont fixées dans lesdits logements (25) à l'aide d'une dose de colle (20), injectée dans ladite section initiale (25a), et **en ce que** ledit volume (24) est rempli d'un gel optique (26) d'indice de réfraction proche de celui du coeur de la fibre optique (19).

7. Dispositif selon les revendications 4 à 6, **caractérisé en ce que** ladite entretoise (21) est formée d'un tronçon de cylindre, muni d'une face supérieure (22) et d'une face inférieure (23) parallèles, soudées de manière étanche, respectivement à la première plaque (11) et à la troisième plaque (15).

8. Dispositif selon les revendications 4 à 7, **caractérisé en ce que** lesdites fibres optiques (19) sont fixées dans lesdits logements (25) à l'aide d'une dose de colle (20), injectée dans ladite section initiale (25a) de manière à former, avec ladite fibre optique (19), un bouchon étanche dans la section initiale (25a), et en ce ledit volume (24) est rempli d'une huile optique (26) d'indice de réfraction proche de celui du coeur de la fibre optique (19), optionnellement comprenant un bulle de gaz pour absorber une éventuelle dilatation thermique de l'huile optique (26).

9. Dispositif selon les revendications 1 à 8, **caractérisé en ce que** lesdits trous (13, 16) sont réalisés par des procédés de photolithographie et gravure ionique réactive.

10. Dispositif selon les revendications 1 à 9, **caractérisé en ce que** lesdites première (11) et troisième plaques (15) comportent des structures d'alignement (14, 17) réalisées de façon concomitante auxdits trous (13, 16), par des procédés de photolithographie et gravure ionique réactive.

11. Dispositif selon les revendications 1 à 10, **caractérisé en ce que** lesdites premières (11) et troisièmes plaques (15) sont montées dans un bâti muni de surfaces de référence pour lesdites structures d'alignement (14, 17).

12. Dispositif selon l'une des revendications 1 à 11, **caractérisé en ce que** lesdites fibres optiques (19) sont nues.

13. Dispositif selon l'une des revendications 1 à 11, **caractérisé en ce que** lesdites fibres optiques (19) sont recouvertes d'un tube destiné à leur protection mécanique.
